# FASCICULE DE BREVET EUROPEEN

(11) **EP 2 506 743 B1**
(45) Date de publication et mention de la délivrance du brevet: **25.12.2013**
(21) Numéro de dépôt: 10803109.7
(22) Date de dépôt: 23.11.2010
(51) Int. Cl.: A47J 31/10, A47J 31/46, A47J 31/50

(54) **APPAREIL DE PREPARATION DE BOISSONS INFUSEES AVEC RESERVE AMOVIBLE**
GERÄT ZUR HERSTELLUNG VON BRÜHGETRÄNKEN MIT ENTFERNBAREM RESERVOIR
APPLIANCE FOR PREPARING INFUSED BEVERAGES HAVING A REMOVABLE STORE

(30) Priorité: 02.12.2009 FR 0905815
(43) Date de publication de la demande: 10.10.2012
(73) Titulaire: SEB S.A., 69130 Ecully (FR)
(72) Inventeur: MORIN, Gilles, F-21490 Varois Et Chaignot (FR); MEINRAD, Hugues, F-53100 Mayenne (FR)
(74) Mandataire: Bourrières, Patrice
(86) Numéro de dépôt international: PCT/FR2010/052494
(87) Numéro de publication internationale: WO 2011/067502

(56) Documents cités:
- WO-A2-2008/149242

## Description

La présente invention concerne un appareil de préparation de boissons infusées comprenant une réserve de boisson infusée et un dispositif de distribution à la tasse de la boisson infusée et se rapporte notamment à une cafetière ou une théière.

On connaît du document WO2007021691 une cafetière comportant un réservoir d'eau, une chaudière, une chambre d'infusion disposée au dessus d'une carafe de café amovible, l'ensemble reposant sur une base. La carafe comprend dans sa partie basse une valve commandée par une gâchette solidaire de la base permettant un service à la tasse. Cette cafetière permet également un service à la carafe. Cependant, ce type d'appareil impose d'utiliser la gravité pour le service à la tasse, ce qui nécessite d'avoir une architecture en hauteur dans laquelle la chambre d'infusion et la carafe sont disposées en partie haute et la base est disposée en partie basse. La hauteur de la base définit la hauteur maximum de la tasse. Ce principe de fonctionnement impose donc un design en hauteur avec un centre de gravité élevé, défavorable à la stabilité de l'appareil. De plus, l'utilisateur doit maintenir sa tasse en pression contre la gâchette à l'encontre d'un ressort de rappel pour faire couler le café.

On connaît également du document WO2008149242 une cafetière du même type mais qui comporte une pompe électrique permettant de transférer le café de la carafe vers un orifice de distribution agencé au dessus de la carafe. La pompe comprend une partie motorisation disposée sous la carafe et une partie turbine, entraînée magnétiquement, disposée dans la carafe. Cependant, l'agencement de la pompe sous la carafe nécessite un socle de hauteur importante et ne permet pas d'optimiser la hauteur de l'appareil. De plus, la carafe comporte la partie turbine de la pompe et une canalisation de distribution qui ne permettent pas à l'utilisateur de se servir de la carafe comme d'une verseuse et qui rendent le nettoyage de la carafe difficile. De plus ce type de pompe en deux parties est très cher à réaliser.

Le but de la présente invention est de remédier aux inconvénients précités et de proposer un appareil de préparation de boissons infusées permettant un service à la verseuse et un service à la tasse dans un design compact et stable.

Un autre but de l'invention est de proposer un appareil de préparation de boissons infusées qui soit facile à nettoyer et qui soit de conception simple et économique à mettre en oeuvre.

Ces buts sont atteints avec un appareil de préparation de boissons infusées comportant un réservoir d'eau, une chaudière, une chambre d'infusion, une réserve amovible de boisson infusée, une buse de distribution de la boisson infusée et une pompe adaptée à faire remonter la boisson infusée de la réserve amovible vers la buse de distribution, caractérisé en ce que la réserve amovible comprend une paroi de fond munie d'un dispositif de connexion permettant de relier la réserve amovible à la pompe lors de la mise en place de la réserve amovible dans l'appareil et permettant de déconnecter la pompe de la réserve amovible lors du retrait de la réserve amovible de l'appareil.

Le dispositif de connexion permet de dissocier la réserve de la pompe de sorte que la pompe peut être positionnée plus librement dans l'appareil et notamment sur le côté pour obtenir un appareil compact et stable. La réserve amovible de boisson infusée forme un réceptacle qui ne comporte aucun élément technique du type turbine ou canalisation et permet ainsi un nettoyage aisé de cette réserve amovible.

Avantageusement, le dispositif de connexion comporte un conduit agencé radialement à la réserve amovible de boisson infusée.

Cette disposition permet de réaliser un dispositif de connexion dans un minimum de hauteur autorisant une insertion latérale de la réserve dans l'appareil pour garder un appareil compact.

De préférence, le dispositif de connexion permet de relier la réserve amovible directement à la pompe.

Par directement, on comprend que l'on ne dispose aucun élément de canalisation entre la sortie du dispositif de connexion et l'entrée de la pompe. Cette disposition permet de limiter la quantité de boisson entre le dispositif de connexion et la pompe et ainsi de garantir une vidange complète de la réserve lors d'un service à la tasse.

Avantageusement, la chaudière est adaptée à guider le dispositif de connexion vers la pompe lors de la mise en place de la réserve amovible dans l'appareil.

Cette disposition permet de faciliter la mise en place de la réserve amovible dans l'appareil.

De préférence, l'appareil comporte un dispositif de fixation de la pompe permettant au moins un degré de liberté de la pompe.

Cette disposition permet une mobilité de la pompe pour corriger un défaut d'alignement lors de la connexion de la réserve amovible à la pompe. De plus, une fois la réserve amovible connectée à la pompe, cette disposition permet une mobilité de la réserve amovible qui favorise un bon appui de son fond sur la chaudière pour un bon transfert thermique.

Avantageusement, le dispositif de fixation de la pompe comprend au moins un élément souple.

Cette disposition permet de réaliser une liaison autorisant au moins un degré de liberté de manière très économique.

De préférence, la réserve amovible de boisson infusée est adaptée pour un service du type verseuse.

Par service du type verseuse, on comprend que l'utilisateur peut saisir la réserve amovible de boisson infusée, l'extraire de l'appareil et assurer le service en versant directement la boisson dans la tasse, comme avec une cafetière filtre traditionnelle. Cette disposition permet d'obtenir un appareil polyvalent autorisant deux modes de distribution de la boisson suivant les besoins de l'utilisateur : un service du type verseuse ou un service à la tasse.

Avantageusement, le dispositif de connexion comporte un clapet adapté à fermer la réserve amovible lorsque l'on déconnecte la réserve amovible de la pompe.

Cette disposition permet d'obtenir une réserve amovible fermée, manipulable lors du service du type verseuse ou lors du transfert vers un point de nettoyage avec un reste de boisson.

De préférence, l'appareil comporte un bac de purge adapté à recevoir la boisson contenue dans la pompe lors du retrait de la réserve amovible de l'appareil.

Cette disposition permet une vidange du circuit de distribution en aval de la réserve amovible lors du retrait de cette dernière de l'appareil. Ainsi l'utilisateur ne laisse pas de boisson stagner dans ce circuit qui pourrait présenter un risque de contamination bactériologique dans le cas d'un arrêt prolongé de l'appareil.

Avantageusement, l'appareil comporte un dispositif repose tasse qui est réglable en hauteur.

Par dispositif repose tasse on comprend un dispositif comportant un support sur lequel l'utilisateur pose sa tasse et éventuellement un bac récolte goutte. Cette disposition permet de positionner l'ouverture de la tasse au plus près de la buse de distribution suivant la taille de la tasse. Ainsi, on évite les projections lors du service d'une tasse.

L'invention sera mieux comprise à l'étude d'un mode de réalisation pris à titre nullement limitatif et illustré dans les figures annexées dans lesquelles :
- La figure 1 illustre une vue en perspective d'un appareil de préparation de boissons infusées selon un mode particulier de réalisation de l'invention.
- La figure 2 illustre une vue arrière en écorché de l'appareil de la figure 1.
- La figure 3 illustre une vue en perspective d'un sous ensemble carafe, chaudière, pompe, socle de l'appareil de la figure 1.
- La figure 4 illustre une vue éclatée en perspective du dispositif de fixation de la pompe de l'appareil de la figure 1.
- La figure 5 illustre une vue en coupe selon la ligne V-V du sous ensemble assemblé de la figure 3.

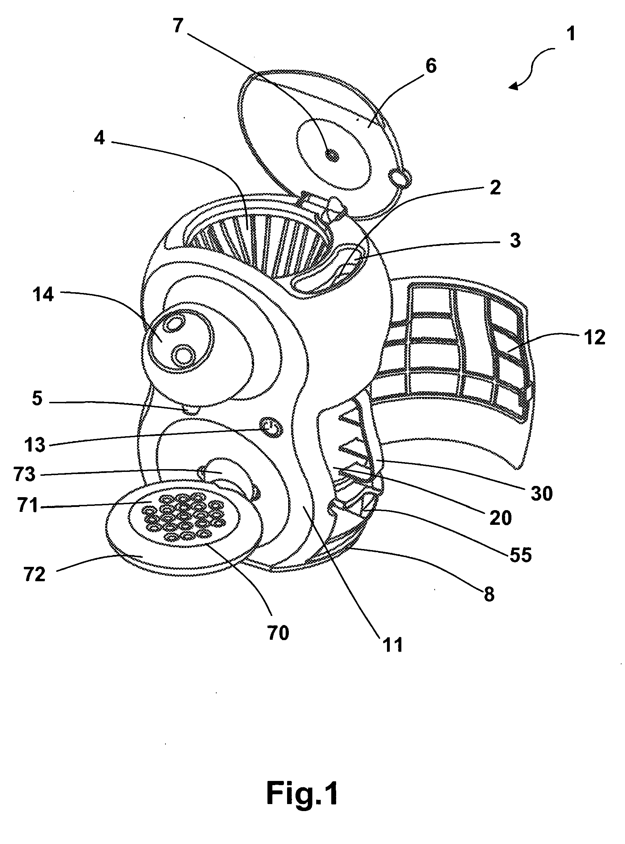

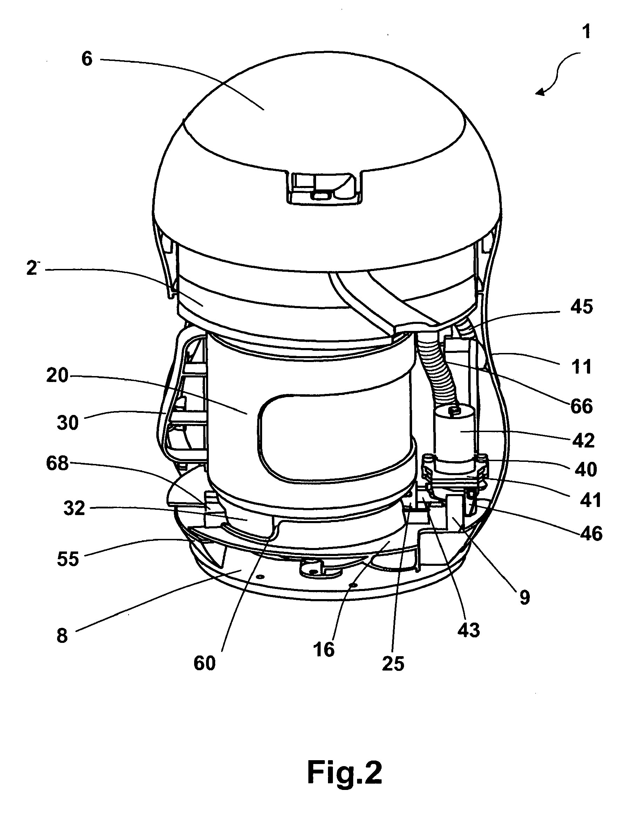

Les figures 1 et 2 illustrent un appareil de préparation de boissons infusées, selon un mode de réalisation de l'invention, qui est une cafetière 1 comportant un réservoir d'eau 2, une chaudière 60, une chambre d'infusion que l'on appellera porte filtre 4, une réserve amovible de café infusé que l'on appellera carafe 20, une buse de distribution 5 du café et une pompe 40 adaptée à faire remonter le café vers la buse de distribution 5.

La cafetière 1 comporte dans sa partie supérieure un couvercle 6 articulé manoeuvrable par l'utilisateur d'une position fermée à une position ouverte pour permettre l'accès au porte filtre 4 et au réservoir d'eau 2. Le réservoir d'eau 2 est agencé autour du porte filtre 4 et comporte une ouverture 3 de remplissage. Le porte filtre 4 est adapté à recevoir un filtre et de la mouture de café.

La cafetière 1 comprend une base 8 adaptée pour être posée sur un plan de travail ou une autre surface de réception et un châssis 11 fixé sur la base 8. Le châssis 11 supporte le porte filtre 4 et le réservoir d'eau 2. La carafe 20 repose sur la chaudière 60 et est disposée sous le porte filtre 4 pour recevoir le café infusé. La base 8 comporte un socle 16 qui supporte la chaudière 60.

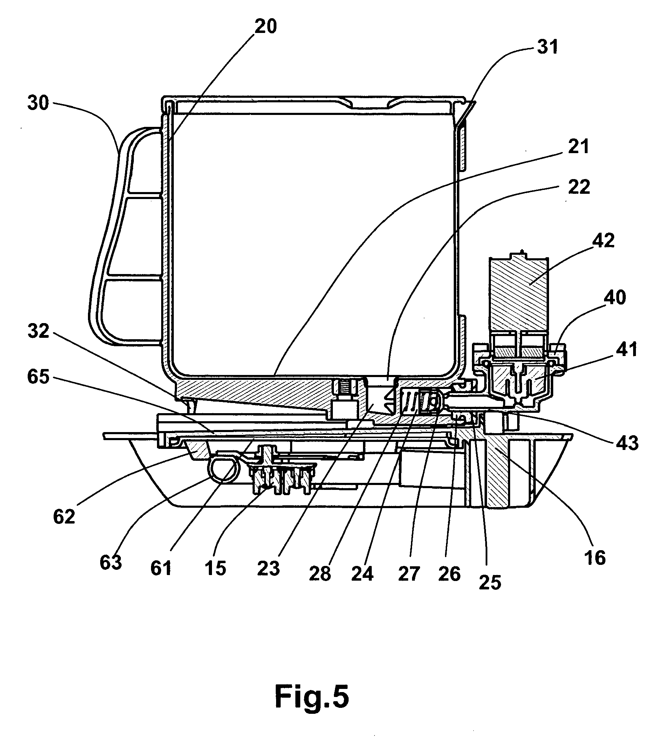

Tel que visible à la figure 5, la chaudière 60 comporte une plaque chauffante 61, un élément chauffant 62 et un tube à eau 63, tous deux en forme de U. Le réservoir d'eau 2 est relié à une première extrémité du tube à eau par une canalisation descendante 66 (Fig 2) qui permet d'alimenter la chaudière en eau par gravité. Une canalisation montante non représentée sur les figures relie une deuxième extrémité du tube à eau à une ouverture 7 (Fig 1) située au centre du couvercle 6 et permet l'alimentation en eau chaude du porte filtre 4 contenant le filtre et la mouture.

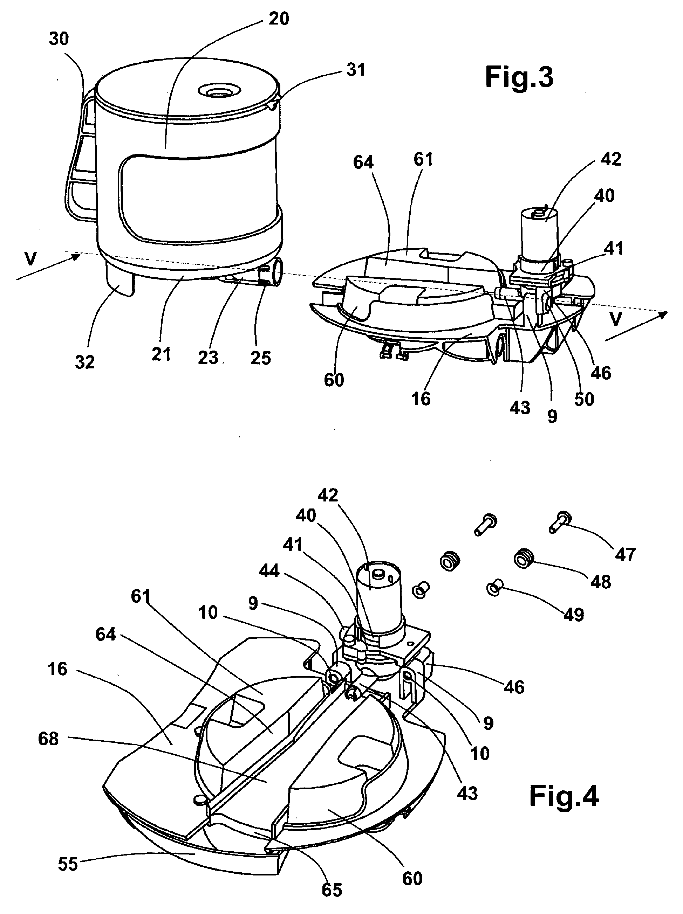

Tel que visible aux figures 3 et 5, la carafe 20 comporte une paroi de fond 21 munie d'un dispositif de connexion 23 avec la pompe 40 de relevage du café. La pompe 40 de type centrifuge comporte une turbine 41 entraînée par un moteur 42 disposé verticalement au dessus de la turbine 41, un conduit d'entrée 43 de forme tubulaire et un conduit de sortie 44 (Fig 4). Ce type de pompe est un composant très économique que l'on peut trouver facilement dans le commerce. Une canalisation souple 45 (Fig 2) relie le conduit de sortie 44 de la pompe 40 à la buse de distribution 5 agencée dans la partie supérieure du châssis 11, côté utilisateur.

La cafetière comporte un dispositif repose tasse 70 visible figure 1, agencé sous la buse de distribution 5 et comportant un support perforé 71 ainsi qu'un bac récolte goutte 72 de forme circulaire. Le dispositif repose tasse 70 est fixé en un point de sa périphérie sur un disque vertical 73 rotatif, de manière excentrée pour permettre une rotation selon un axe perpendiculaire à la face avant de la cafetière 1. Le bac récolte goutte 72 est symétrique selon un plan horizontal et comprend un deuxième support perforé 71. La rotation du dispositif permet ainsi de modifier la hauteur de dépose de la tasse. Le support perforé 71 peut être métallique ou plastique.

D'une manière avantageuse, le dispositif de connexion 23 illustré aux figures 3 et 5, comporte un conduit 24 issu d'une ouverture 22 dans la paroi de fond 21 de la carafe 20 et agencé radialement à un axe vertical de la carafe 20 vers une extrémité de sortie 25. Un joint 26 souple disposé dans l'extrémité de sortie 25 permet de raccorder de manière étanche la carafe 20 au conduit d'entrée 43 de la pompe 40. Le dispositif de connexion 23 comporte un clapet 27 monté sur un ressort 28. Lorsque l'utilisateur retire la carafe 20, le ressort 28 pousse le clapet 27 contre le joint 26 et assure ainsi la fermeture du dispositif de connexion 23. Lorsque l'utilisateur replace la carafe 20 dans la cafetière 1, le conduit d'entrée 43 de la pompe 40 glisse dans le joint 26 et repousse le clapet 27, permettant l'ouverture du dispositif de connexion 23.

La carafe 20 repose sur la chaudière 60 qui comporte une rainure 68 centrale recevant le dispositif de connexion 23. La pompe 40 est fixée de manière à ce que l'axe du conduit d'entrée 43 soit positionné dans l'axe de l'extrémité de sortie 25. La rainure 68 comprend deux parois latérales 64 formant un cône d'entrée pour permettre également de guider le dispositif de connexion 23 vers le conduit d'entrée 43 lors de la mise en place de la carafe 20.

La pompe 40 comporte deux excroissances 46 disposées latéralement au conduit d'entrée 43 et en vis-à-vis de deux pattes 9 issues du socle 16. Chaque excroissance 46 comprend un orifice 50 épaulé qui permet le passage d'une vis 47, d'une bague 49 et d'un élément 48 souple. Chaque patte 9 comprend un trou taraudé 10 recevant la vis 47 pour immobiliser la bague 49. La souplesse de l'élément 48 et un jeu axial entre l'épaulement de l'orifice 50 et la tête de la vis 47 permet d'obtenir un montage flottant de la pompe 40. Ainsi, la mobilité de la pompe permet de rattraper un défaut d'alignement du dispositif de connexion 23 de la carafe 20 avec le conduit d'entrée 43. La mobilité de la pompe 40 permet également d'assurer un bon appui de la carafe 20 sur la chaudière 60 et par là même un bon maintien au chaud du café.

Dans le fond de la rainure 68 de la chaudière 60, le socle 16 forme une goulotte 65 entre le conduit d'entrée 43 de la pompe 40 et un bac de purge 55. Lors du retrait de la carafe 20, la goulotte 65 canalise le café qui s'échappe du conduit d'entrée 43 de la pompe 40 vers le bac de purge 55. Le bac récolte goutte 72 du dispositif repose tasse 70 est également relié au bac de purge 55.

La cafetière 1 comporte une porte 12 (Fig 1) articulée manoeuvrable par l'utilisateur entre deux positions. Une première position fermée est utilisée pour le service à la tasse ou le rangement de la cafetière. Une deuxième position ouverte permet d'extraire la carafe 20 de la cafetière 1 pour un service à la verseuse ou pour un nettoyage de la carafe 20. La position ouverte permet également d'extraire le bac de purge 55 pour le vider et le nettoyer.

La carafe comporte une poignée 30, un bec verseur 31 et deux pieds 32 qui permettent, avec l'extrémité du dispositif de connexion 23, de former trois points d'appui pour poser la carafe 20 hors de la cafetière.

La cafetière 1 comprend un circuit de commande comportant un bouton marche/arrêt 13, des moyens de variation de la vitesse du moteur 42, une molette 14 rotative de commande du moteur 42 et un limiteur thermique 15 de la chaudière 60. L'amplitude de la rotation de la molette 14 pilote l'amplitude la variation de la vitesse du moteur 42 et permet ainsi d'obtenir un débit variable. Le retour en position repos de la molette 14 est assuré par un ressort de rappel.

En fonctionnement, l'utilisateur branche l'appareil 1, ouvre le couvercle 6, place un filtre dans le porte filtre 4 et met dans le filtre la quantité appropriée de mouture de café. Il verse ensuite dans le réservoir d'eau 2 la quantité d'eau correspondant à la quantité de café désirée puis referme le couvercle 6. Après avoir vérifié la présence de la carafe 20 sous le porte filtre 4, l'utilisateur appuie sur le bouton marche/arrêt 13 et le café est réalisé comme dans une cafetière filtre électrique traditionnelle. L'eau du réservoir d'eau 2 est transférée par gravité dans la chaudière 60, puis sous l'effet de la chauffe, l'eau est expulsée vers l'ouverture 7 du couvercle au dessus du porte filtre 4. L'eau chaude s'écoule ensuite à travers la mouture et le filtre pour se transformer en café et couler dans la carafe 20.

Une fois le café passé, l'utilisateur peut dans un premier mode d'utilisation se servir un café à la tasse. Il pose alors une tasse sur le dispositif repose tasse 70 sous la buse de distribution 5 puis il tourne la molette 14 qui commande le fonctionnement de la pompe 40 pour transférer le café de la carafe 20 à la buse de distribution 5. Lorsque la quantité de café souhaitée a été délivrée dans la tasse, l'utilisateur relâche la molette 14 qui revient à sa position initiale sous l'effet du ressort et stoppe le fonctionnement de la pompe 40. L'écoulement du café s'arrête. Le café restant dans la carafe 20 est maintenu au chaud à l'aide de la plaque chauffante 61 de la chaudière 60 pour un service ultérieur.

L'utilisateur peut dans un deuxième mode d'utilisation se servir un café à la verseuse. Il ouvre alors la porte 12 et saisit la poignée 30. L'extraction de la carafe 20 se fait dans un mouvement horizontal, la carafe glissant sur la plaque chauffante 61 et le dispositif de connexion 23 glissant dans la rainure 68. Lors du retrait de la carafe 20, le joint souple 26 du dispositif de connexion 23 coulisse sur le conduit d'entrée 43 de la pompe, le clapet 27 sous l'effet du ressort 28 vient en appui sur le joint souple 26 et ferme le dispositif de connexion 23. Une fois la carafe 20 retirée, l'utilisateur peut servir un ou plusieurs cafés. Pour replacer la carafe 20 dans la cafetière 1, l'utilisateur positionne le dispositif de connexion 23 dans le cône d'entrée de la rainure 68 et insère la carafe 20 dans un mouvement horizontal tout en posant la carafe 20 sur la plaque chauffante 61. En fin d'insertion, la carafe 20 est reconnectée à la pompe 40 à l'aide du dispositif de connexion 23.

Pour le nettoyage, l'utilisateur retire la carafe 20 comme pour un service à la tasse, vide dans l'évier un éventuel reliquat de café et nettoie sous le robinet ou à l'éponge la carafe. Lors du retrait de la carafe 20, le café contenu dans la pompe 40 et dans la canalisation 45 se vidange dans le bac de purge 55 via la goulotte 65. L'utilisateur retire également périodiquement le bac de purge 55 pour le vider et le nettoyer.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention comme definie dans les revendications.

Ainsi dans une variante de réalisation de l'invention, la pompe peut être placée au dessus de la carafe dans l'environnement du porte filtre et du réservoir.

Dans une autre variante de l'invention, le dispositif de fixation de la pompe comporte une glissière verticale et/ou une glissière horizontale.

## Revendications

1. Appareil de préparation de boissons infusées comportant un réservoir d'eau (2), une chaudière (60), une chambre d'infusion (4), une réserve amovible (20) de boisson infusée, une buse de distribution (5) de la boisson infusée et une pompe (40) adaptée à faire remonter la boisson infusée de la réserve amovible (20) vers la buse de distribution (5), **caractérisé en ce que** la réserve amovible (20) comprend une paroi de fond (21) munie d'un dispositif de connexion (23) permettant de relier la réserve amovible (20) à la pompe (40) lors de la mise en place de la réserve amovible (20) dans l'appareil et permettant de déconnecter la pompe (40) de la réserve amovible (20) lors du retrait de la réserve amovible (20) de l'appareil.

2. Appareil de préparation de boissons infusées selon la revendication 1, **caractérisé en ce que** le dispositif de connexion (23) comporte un conduit (24) agencé radialement à la réserve amovible (20) de boisson infusée.

3. Appareil de préparation de boissons infusées selon l'une quelconque des revendications 1 à 2, **caractérisé en ce que** le dispositif de connexion (23) permet de relier la réserve amovible (20) directement à la pompe (40).

4. Appareil de préparation de boissons infusées selon l'une quelconque des revendications 1 à 3, **caractérisé en ce que** la chaudière (60) est adaptée à guider le dispositif de connexion (23) vers la pompe (40) lors de la mise en place de la réserve amovible (20) dans l'appareil.

5. Appareil de préparation de boissons infusées selon l'une quelconque des revendications 1 à 4, **caractérisé en ce que** ledit appareil comporte un dispositif de fixation de la pompe (40) permettant au moins un degré de liberté de ladite pompe (40).

6. Appareil de préparation de boissons infusées selon la revendication 5, **caractérisé en ce que** le dispositif de fixation de la pompe (40) comprend au moins un élément (48) souple.

7. Appareil de préparation de boissons infusées selon l'une quelconque des revendications 1 à 6, **caractérisé en ce que** la réserve amovible (20) de boisson infusée est adaptée pour un service du type verseuse.

8. Appareil de préparation de boissons infusées selon l'une quelconque des revendications 1 à 7, **caractérisé en ce que** le dispositif de connexion (23) comporte un clapet (27) adapté à fermer la réserve amovible (20) lorsque l'on déconnecte la réserve amovible (20) de la pompe (40).

9. Appareil de préparation de boissons infusées selon l'une quelconque des revendications 1 à 8, **caractérisé en ce que** ledit appareil comporte un bac de purge (55) adapté à recevoir la boisson contenue dans la pompe (40) lors du retrait de la réserve amovible (20) de l'appareil.

10. Appareil de préparation de boissons infusées selon l'une quelconque des revendications 1 à 9, **caractérisé en ce que** l'appareil comporte un dispositif repose tasse (70) qui est réglable en hauteur.

## Patentansprüche

1. Gerät zur Zubereitung von aufgebrühten Getränken, das Folgendes umfasst: einen Wassertank (2), einen Erhitzer (60), eine Brühkammer (4), einen abnehmbaren Vorratsbehälter (20) für das aufgebrühte Getränk, eine Düse (5) zur Ausgabe des aufgebrühten Getränks und eine Pumpe (40), die so ausgelegt ist, dass sie das aufgebrühte Getränk von dem abnehmbaren Vorratsbehälter (20) zur Ausgabedüse (5) fördert, **dadurch gekennzeichnet, dass** der abnehmbare Vorratsbehälter (20) eine Bodenwand (21) aufweist, die mit einem Verbindungssystem (23) ausgestattet ist, das beim Einsetzen des abnehmbaren Vorratsbehälters (20) in das Gerät die Verbindung des abnehmbaren Vorratsbehälters (20) mit der Pumpe (40) und beim Abnehmen des abnehmbaren Vorratsbehälters (20) vom Gerät die Trennung der Pumpe (40) von dem abnehmbaren Vorratsbehälter (20) gestattet.

2. Gerät zur Zubereitung von aufgebrühten Getränken nach Anspruch 1, **dadurch gekennzeichnet, dass** das Verbindungssystem (23) eine Leitung (24) umfasst, die radial am abnehmbaren Vorratsbehälter (20) für das aufgebrühte Getränk angeordnet ist.

3. Gerät zur Zubereitung von aufgebrühten Getränken nach einem der Ansprüche 1 und 2, **dadurch gekennzeichnet, dass** das Verbindungssystem (23) die direkte Verbindung des abnehmbaren Vorratsbehälters (20) mit der Pumpe (40) gestattet.

4. Gerät zur Zubereitung von aufgebrühten Getränken nach einem der Ansprüche 1 bis 3, **dadurch gekennzeichnet, dass** der Erhitzer (60) so ausgelegt ist, dass er das Verbindungssystem (23) beim Einsetzen des Vorratsbehälters (20) in das Gerät zur Pumpe (40) hinführt.

5. Gerät zur Zubereitung von aufgebrühten Getränken nach einem der Ansprüche 1 bis 4, **dadurch gekennzeichnet, dass** das genannte Gerät ein System zur Befestigung der Pumpe (40) umfasst, das der genannten Pumpe (40) zumindest einen Freiheitsgrad gestattet.

6. Gerät zur Zubereitung von aufgebrühten Getränken nach Anspruch 5, **dadurch gekennzeichnet, dass** das System zur Befestigung der Pumpe (40) mindestens ein weiches Element (48) umfasst.

7. Gerät zur Zubereitung von aufgebrühten Getränken nach einem der Ansprüche 1 bis 6, **dadurch gekennzeichnet, dass** der abnehmbare Vorratsbehälter (20) für das aufgebrühte Getränk für den Kannenbetrieb ausgelegt ist.

8. Gerät zur Zubereitung von aufgebrühten Getränken nach einem der Ansprüche 1 bis 7, **dadurch gekennzeichnet, dass** das Verbindungssystem (23) ein Klappenventil (27) umfasst, das so ausgelegt ist, dass es den abnehmbaren Vorratsbehälter (20) verschließt, wenn der abnehmbare Vorratsbehälter (20) von der Pumpe (40) getrennt wird.

9. Gerät zur Zubereitung von aufgebrühten Getränken nach einem der Ansprüche 1 bis 8, **dadurch gekennzeichnet, dass** das genannte Gerät eine Ablaufwanne (55) umfasst, die so ausgelegt ist, dass sie beim Abnehmen des abnehmbaren Vorratsbehälters (20) vom Gerät das in der Pumpe (40) enthaltene Getränk aufnimmt.

10. Gerät zur Zubereitung von aufgebrühten Getränken nach einem der Ansprüche 1 bis 9, **dadurch gekennzeichnet, dass** das Gerät eine in der Höhe verstellbare Tassenabstelleinrichtung (70) aufweist.

## Claims

1. Appliance for preparing infused beverages comprising a water tank (2), a boiler (60), an infusion chamber (4), a removable reserve (20) of infused beverage, a nozzle (5) for dispensing the infused beverage and a pump (40) adapted to raise the infused beverage from the removable reserve (20) towards the dispensing nozzle (5), **characterised in that** the removable reserve (20) comprises a bottom wall (21) provided with a connection device (23) to connect the removable reserve (20) to the pump (40) when positioning the removable reserve (20) in the appliance and to disconnect the pump (40) from the removable reserve (20) when removing the removable reserve (20) from the appliance.

2. Appliance for preparing infused beverages according to claim 1, **characterised in that** the connecting device (23) comprises a pipe (24) arranged radially to the removable reserve (20) of infused beverage.

3. Appliance for preparing infused beverages according to claim 1 or 2, **characterised in that** the connecting device (23) can be used to connect the removable reserve (20) directly to the pump (40).

4. Appliance for preparing infused beverages according to any of claims 1 to 3, **characterised in that** the boiler (60) is adapted to guide the connecting device (23) to the pump (40) when positioning the removable reserve (20) in the appliance.

5. Appliance for preparing infused beverages according to any of claims 1 to 4, **characterised in that** said appliance comprises a pump (40) fixing device allowing at least one degree of freedom of said pump (40).

6. Appliance for preparing infused beverages according to claim 5, **characterised in that** the pump (40) fixing device comprises at least one flexible element (48).

7. Appliance for preparing infused beverages according to any of claims 1 to 6, **characterised in that** the removable reserve (20) of infused beverage is adapted for pouring type service.

8. Appliance for preparing infused beverages according to any of claims 1 to 7, **characterised in that** the connecting device (23) comprises a valve (27) adapted to close the removable reserve (20) when disconnecting removable reserve (20) from the pump (40).

9. Appliance for preparing infused beverages according to any of claims 1 to 8, **characterised in that** said appliance comprises a drain tray (55) adapted to receive the beverage contained in the pump (40) when removing the removable reserve (20) from the appliance.

10. Appliance for preparing infused beverages according to any of claims 1 to 9, **characterised in that** the appliance comprises a cup support (70) of adjustable height.
